# EUROPEAN PATENT APPLICATION

(11) **EP 1 795 950 A1**
(43) Date of publication of application: **13.06.2007**
(21) Application number: 06125315.9
(22) Date of filing: 04.12.2006
(51) Int. Cl.: G02F 1/1335, G02F 1/1347

(54) **Liquid crystal display and manufacturing method therefor**

(30) Priority: 06.12.2005 KR 20050117983
(71) Applicant: Samsung Electronics Co., Ltd., Suwon-si, Gyeonggi-Do (KR)
(72) Inventor: Kim, Jae-Hyun 845-501 Beokjeokgol, Suwon-si Gyeonggi-do (KR); Kim, Seong-Ho, Giheung-gu Yongin-si Gyeonggi-do (KR); Yum, Ho-Nam, Gangnam-gu Seoul (KR)
(74) Representative: Greene, Simon Kenneth

(57) **Abstract**

A method of manufacturing an LCD includes forming a gate line, depositing a gate insulating layer on the substrate, forming a semiconductor layer on the gate insulating layer, forming a data line and a drain electrode on the semiconductor layer, and forming a pixel electrode (191) connected to the drain electrode including a transparent electrode and a reflecting electrode disposed on a portion of the transparent electrode. The lower layer (194p) of the reflecting electrode (194) includes an Ag alloy containing Mo, and the upper layer (194q) of the reflecting electrode includes a transparent conductive material such as IZO or ITO. The refraction index of second layer may be larger than that of the LC layer, and light reflected on the surface of the second layer and light reflected on the surface of the first layer may constructively interfere with each other.

## Description

The present invention relates to a transflective liquid crystal display (LCD), a display panel thereof, and a manufacturing method of the display panel.

LCDs are one of the most widely used flat panel displays. An LCD includes a liquid crystal (LC) layer interposed between two panels that are provided with field-generating electrodes. The LCD displays images by applying voltages to the field-generating electrodes to generate an electric field that determines the orientation of the LC molecules which varies the polarization of incident light. The light having varying polarization is either intercepted by or allowed to pass through a polarizing film, thereby displaying images.

LCDs are categorized as non-emissive displays, i.e., they do not themselves produce any light and accordingly, utilize light from lamps of a separate backlight unit or incident ambient light. Depending on the light sources employed, LCDs are classified as transmissive or reflective. The light source of the transmissive LCD is a backlight, and the light source of the reflective LCD is an external light. The reflective type of LCD is usually employed in a small or mid-size display device. The transflective LCD, which uses both a backlight and an external light as light sources are usually applied to small or mid-size display devices.

The pixel of a transflective LCD includes a transmissive region and a reflective region. A transparent electrode is formed in the transmissive region while a transparent electrode and a reflecting electrode disposed thereon are formed in the reflective region. The reflecting electrode must have high reflectivity and good contact characteristics with the transparent electrode.

Aluminum-neodymium (AlNd) or an alloy thereof having good contact characteristics with a transparent electrode made of a material such as ITO and IZO has relatively low reflectivity while silver (Ag), having high reflectivity, has relatively poorer contact characteristics with ITO and IZO.

### SUMMARY OF THE INVENTION

A display panel of a liquid crystal display according to an embodiment of the present invention includes a substrate and a reflecting electrode formed on the substrate, the reflecting electrode has a double-layered structure including an upper layer and a lower layer, the lower layer of the reflecting electrode includes an Ag alloy containing Mo, and the upper layer of the reflecting electrode includes a transparent conductive material. The upper layer of the reflecting electrode may include IZO or ITO.

When the thickness of the upper layer is d, the wavelength of visible ray is λ, and the refraction index of the upper layer at the predetermined wavelength is n2, the thickness will substantially satisfy the relationship: d=1/2×(λ/n2).

A liquid crystal display according to an embodiment of the present invention includes a first substrate, a gate line and a data line formed on the first substrate, a thin film transistor connected to the gate line and the data line, a pixel electrode connected to the thin film transistor and including a reflecting electrode, a second substrate facing the first substrate, a common electrode formed on the second substrate, and a liquid crystal layer located between the first substrate and the second substrate. The reflecting electrode includes a first layer having an Ag alloy containing Mo. The reflecting electrode may further include a second layer disposed on the first layer and made of a conductive material. The second layer of the reflecting electrode may include IZO or ITO. The refraction index of the second layer may be larger than that of the LC layer. Light reflected from the surface of the second layer and light reflected from the surface of the first layer may constructively interfere with each other.

The LCD may have a transmissive area and a reflective area, the pixel electrode may further include a transparent electrode, the transparent electrode may be disposed in the transmissive area and the reflective area, and the reflecting electrode may be disposed in the reflective area. The reflecting electrode may be disposed on the transparent electrode.

A manufacturing an LCD according to an embodiment of the present invention includes forming a gate line, depositing a gate insulating layer on the substrate, forming a semiconductor layer on the gate insulating layer, forming a data line and a drain electrode on the semiconductor layer, and forming a pixel electrode connected to the drain electrode including a transparent electrode and a reflecting electrode disposed on a portion of the transparent electrode. The lower layer of the reflecting electrode includes an Ag alloy containing Mo, and the upper layer of the reflecting electrode includes a transparent conductive material. The upper layer of the reflecting electrode may include IZO or ITO.

The forming of the pixel electrode may include forming the transparent electrode, depositing the lower layer of the reflecting electrode on the transparent electrode, depositing the upper layer of the reflecting electrode on the lower layer, coating a photosensitive film on the upper layer of the reflecting electrode, and patterning the upper layer and the lower layer of the reflecting electrode by photolithography and etching, and the upper layer of the reflecting electrode includes IZO or ITO.

There is no need for annealing between the depositing of the upper layer and the coating of the photosensitive film, and there is no need for a hard-bake process between the coating of the photosensitive film and the patterning of the upper layer and the lower layer.

### BRIEF DESCRIPTION OF THE DRAWINGS

FIG. 1 is a schematic cross-sectional view of an LCD according to an embodiment of the present invention;
FIG. 2 is a layout view of an LCD according to an embodiment of the present invention;
FIG. 3 and FIG. 4 are sectional views of the TFT array panel shown in FIG. 2 taken along line III-III' and line IV-IV', respectively; and
FIG. 5 is a schematic cross-sectional view of a reflecting electrode according to an embodiment of the present invention.

### DETAILED DESCRIPTION OF THE EMBODIMENTS

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Now, an LCD according to an embodiment of the present invention will be described in detail with reference to the accompanying drawings.

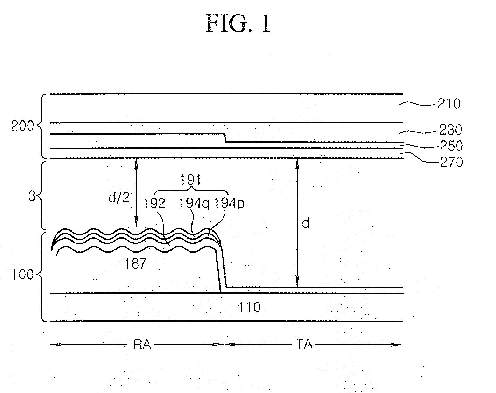

FIG. 1, the LCD includes a TFT array panel 100, a common electrode panel 200 facing TFT array panel 100, and an LC layer 3 interposed therebetween.

TFT array panel 100 includes an insulation substrate 110, a plurality of switching elements (not shown) and a passivation layer 180 formed on insulation substrate 110, and pixel electrodes 191 formed on passivation layer 180. Each pixel electrode 191 includes a transparent electrode 192 and a reflecting electrode 194 disposed on a portion of transparent electrode 192. Reflecting electrode 194 has a dual-layered structure including a lower layer 194p and an upper layer 194q.

The common electrode panel 200 includes an insulation substrate 210, and color filters 220 and a common electrode 270 formed on the insulation substrate 210.

The transflective LCD liquid crystal display includes a transmissive area TA and a reflective area RA defined by transparent electrode 192 and reflective electrode 194, respectively.

In detail, areas disposed under and over an exposed portion of a transparent electrode 192 are transmissive regions TA, and areas disposed under and over a reflective electrode 194 are reflective regions RA. In the transmissive regions TA, light from a backlight unit (not shown) disposed under TFT array panel 100 passes through the LC layer 3 to display desired images. In the reflective regions RA, external light such as sunlight or ambient light that is incident thereon passes through the common electrode panel 200 and through LC layer 3 to reach reflective electrodes 194. Then, the external light is reflected by reflective electrodes 194 and passes through LC layer 3 again, to display desired images.

The average thickness of color filters 230 disposed in the reflective region RA is about half of that disposed in transmissive region TA so that color tone between the reflective region RA and the transmissive region TA may be substantially uniform.

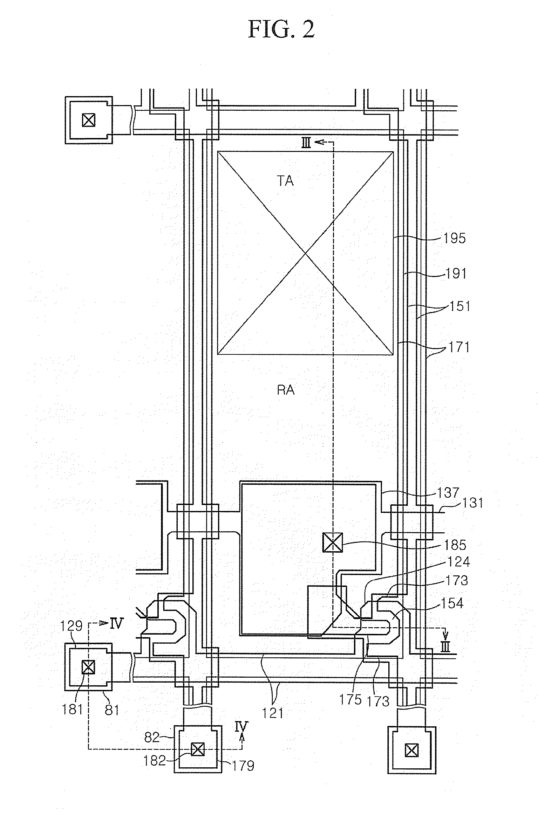

Now, the structure of an embodiment of an LCD according to the present invention will be described with reference to FIG. 2 to FIG. 4.

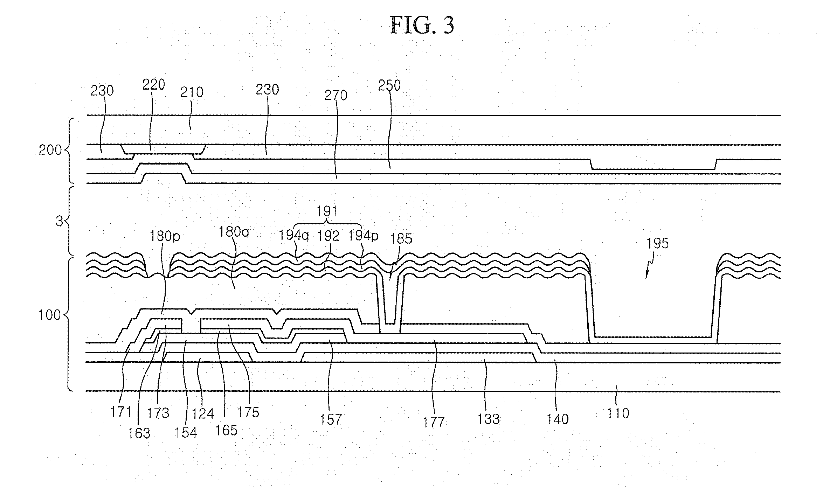

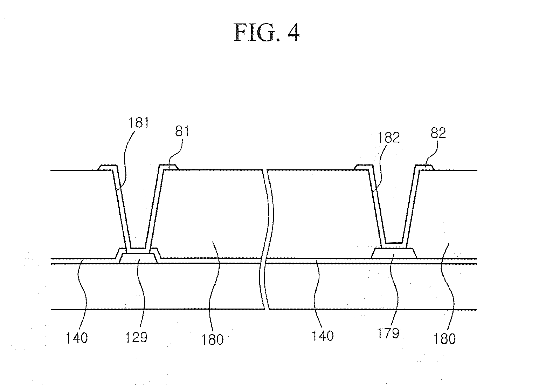

FIG. 2 is a layout view of an LCD according to an embodiment of the present invention, and FIG. 3 and FIG. 4 are sectional views of the TFT array panel shown in FIG. 2 taken along line III-III' and line IV-IV', respectively.

An LCD according to an embodiment of the present invention includes a TFT array panel 100, a common electrode panel 200 facing TFT array panel 100, and an LC layer 3 interposed therebetween.

First, TFT array panel 100 will be described.

A plurality of gate lines 121 and a plurality of storage electrode lines 131 are formed on an insulating substrate 110 made of a material such as transparent glass or plastic.

Gate lines 121 transmit gate signals and extend substantially in a horizontal direction. Each of gate lines 121 includes a plurality of gate electrodes 124 projecting upward therefrom and an end portion 129 having a large area for contact with another layer or an external driving circuit. A gate driving circuit (not shown) for generating the gate signals may be mounted on a flexible printed circuit ("FPC") film (not shown), which may be attached to the substrate 110, directly mounted on the substrate 110, or integrated with the substrate 110. Gate lines 121 may extend to be connected to a driving circuit that may be integrated with the substrate 110.

Storage electrode lines 131 are supplied with a predetermined voltage and extend substantially parallel to gate lines 121. Each of storage electrode lines 131 is disposed between two adjacent gate lines 121 and disposed closer to the lower of the two gate lines 121. Each of storage electrode lines 131 includes a storage electrode 133 extending upward and downward therefrom. However, storage electrode lines 131 may have various shapes and arrangements.

Gate lines 121 and storage electrode lines 131 are preferably made of an Al-containing metal such as AI and an AI alloy, an Ag-containing metal such as Ag and a Ag alloy, a Cu-containing metal such as Cu and a Cu alloy, a Mo-containing metal such as Mo and a Mo alloy, Cr, Ta, or Ti. However, they may have a multi-layered structure including two conductive films (not shown) having different physical characteristics. One of the two films is preferably made of a low resistivity metal including an Al-containing metal, an Ag-containing metal, and a Cu-containing metal for reducing signal delay or voltage drop. The other film is preferably made of a material such as a Mo-containing metal, Cr, Ta, or Ti, which has good physical, chemical, and electrical contact characteristics with other materials such as indium tin oxide (ITO) or indium zinc oxide (IZO). Good examples of the combination of the two films are a lower Cr film and an upper AI (alloy) film and a lower AI (alloy) film and an upper Mo (alloy) film. However, gate lines 121 and storage electrode lines 131 may be made of various metals or conductors.

The lateral sides of gate lines 121 and storage electrode lines 131 are inclined relative to the surface of substrate 110, the inclination angles thereof are in a range of from about 30 to 80 degrees.

A gate insulating layer 140 preferably made of silicon nitride (SiNx) or silicon oxide (SiOx) is formed on gate lines 121 and storage electrode lines 131.

A plurality of semiconductor stripes 151 preferably made of hydrogenated amorphous silicon (abbreviated to "a-Si") or polysilicon are formed on gate insulating layer 140. Each of semiconductor stripes 151 extends substantially in the longitudinal direction and includes a plurality of projections 154 branched out toward gate electrodes 124 and a plurality of projections 157 branched out toward storage electrode 137. Semiconductor stripes 151 become wide near gate lines 121 and storage electrode lines 131 such that semiconductor stripes 151 cover large areas of gate lines 121 and storage electrode lines 131**.**

A plurality of ohmic contact stripes and islands 161 and 165 are formed on semiconductor stripes 151. Ohmic contact stripes and islands 161 and 165 are preferably made of n+ hydrogenated a-Si heavily doped with an n-type impurity such as phosphorous, or they may be made of silicide. Each ohmic contact stripe 161 includes a plurality of projections 163, and the projections 163 and the ohmic contact islands 165 are located in pairs on the projections 154 of semiconductor stripes 151.

The lateral sides of semiconductor stripes 151 and the ohmic contacts 161 and 165 are inclined relative to the surface of the substrate 110, and the inclination angles thereof are preferably in a range of about 30 to 80 degrees.

A plurality of data lines 171 and a plurality of drain electrodes 175 are formed on the ohmic contacts 161 and 165 and on the gate insulating layer 140.

Data lines 171 transmit data signals and extend substantially in the longitudinal direction to intersect gate lines 121 and storage electrode lines 131. Each data line 171 includes a plurality of source electrodes 173 projecting toward gate electrodes 124, and an end portion 179 having a large area for contact with another layer or an external driving circuit. A data driving circuit (not shown) for generating the data signals may be mounted on an FPC film (not shown), which may be attached to the substrate 110, directly mounted on the substrate 110, or integrated with the substrate 110. Data lines 171 may extend to be connected to a driving circuit that may be integrated with the substrate 110.

Drain electrodes 175 are separated from data lines 171 and disposed opposite the source electrodes 173 with respect to gate electrodes 124. Each of drain electrodes 175 includes a wide end portion 177 and a narrow end portion. The wide end portion 177 overlaps a storage electrode 137 of a storage electrode line 131, and the narrow end portion is partly enclosed by a source electrode 173.

A gate electrode 124, a source electrode 173, and a drain electrode 175 along with a projection 154 of a semiconductor stripe 151 form a TFT having a channel formed in the projection 154 disposed between the source electrode 173 and the drain electrode 175.

Data lines 171 and drain electrodes 175 are preferably made of a refractory metal such as Cr, Mo, Ta, Ti, or alloys thereof. However, they may have a multi-layered structure including a refractory metal film (not shown) and a low resistivity film (not shown). Good examples of the multi-layered structure are a double-layered structure including a lower Cr/Mo (alloy) film and an upper Al (alloy) film, and a triple-layered structure of a lower Mo (alloy) film, an intermediate Al (alloy) film, and an upper Mo (alloy) film. However, data lines 171 and drain electrodes 175 may be made of various metals or conductors.

Data lines 171 and drain electrodes 175 have inclined edge profiles, and the inclination angles thereof are in a range of from about 30 to 80 degrees.

Ohmic contacts 161 and 165 are interposed only between the underlying semiconductor stripes 151 and the overlying conductors 171 and 175 thereon, and reduce the contact resistance therebetween. Although semiconductor stripes 151 are narrower than data lines 171 at most places, the width of semiconductor stripes 151 becomes larger near gate lines 121 and storage electrode lines 131 to smooth the profile of the surface, thereby preventing disconnection of data lines 171. Semiconductor stripes 151 include some exposed portions that are not covered with data lines 171 and drain electrodes 175 such as portions located between the source electrodes 173 and drain electrodes 175.

A passivation layer 180 is formed on data lines 171, drain electrodes 175, and the exposed portions of semiconductor stripes 151. Passivation layer 180 includes a lower passivation film 180p preferably made of an inorganic insulator such as silicon nitride or silicon oxide, and an upper passivation film 180q preferably made of an organic insulator. Preferably, the upper passivation film 180q may have a dielectric constant of less than about 4.0, and photosensitivity. The upper passivation film 180q has an embossed surface. The upper passivation film 180q has an opening exposing a partial portion of the lower passivation film 180p to be a transmitting window 195. However, passivation layer 180 may have a single-layer structure, preferably made of an inorganic or organic insulator.

Passivation layer 180 has a plurality of contact holes 182 and 185 exposing the end portions 179 of data lines 171 and drain electrodes 175, respectively. Passivation layer 180 and the gate insulating layer 140 have a plurality of contact holes 181 exposing the end portions 129 of gate lines 121.

A plurality of pixel electrodes 191 and a plurality of contact assistants 81 and 82 are formed on passivation layer 180.

Each of pixel electrodes 191 is curved along the embossed surface of the upper passivation film 180q, and includes a transparent electrode 192 and a reflective electrode 194 thereon. Transparent electrodes 192 are preferably made of a transparent conductor such as ITO or IZO.

Reflecting electrode 194 has a dual-layered structure having a lower layer 194p including a reflective metal and an upper layer 194q including a transparent conductive material. Lower layer 194p of reflecting electrode 194 may be made of a silver-molybdenum alloy (Ag-Mo alloy), and the upper layer 194q thereof may be made of indium zinc oxide (IZO) or amorphous indium tin oxide (a-ITO).

The lower layer 194p of reflecting electrode 194 may be made of an Ag-Mo alloy that has substantially the same reflectivity as pure Ag, and has a good contact characteristic with transparent electrode 192 made of ITO or IZO.

If the upper layer 194q of reflecting electrode 194 has good contact characteristics with the photosensitive material used in photolithography for patterning reflecting electrode 194, then an inverse taper structure may be formed in the lower layer 194p of reflecting electrode 194. However, the upper layer 194q of reflecting electrode 194 made of IZO or a-ITO prevents the inverse taper structure from being formed.

Reflective electrode 194 is disposed on a portion of transparent electrode 192, and thereby the remaining portion of transparent electrode 192 is exposed. The exposed transparent electrode 192 is disposed in a region corresponding to the transmitting window 195.

Pixel electrodes 191 are physically and electrically connected to drain electrodes 175 through contact holes 185 such that pixel electrodes 191 receive data voltages from drain electrodes 175. Pixel electrodes 191 that are supplied with the data voltages generate electric fields in cooperation with a common electrode 270 of the common electrode panel 200 that is supplied with a common voltage, which determine the orientations of LC molecules (not shown) of an LC layer 3 disposed between the two electrodes 191 and 270 to adjust polarization of the incident light passing through the LC layer 3.

A pixel electrode 191 and the common electrode (270) form a capacitor referred to as a "liquid crystal capacitor," which stores applied voltages after the TFT turns off.

A transflective LCD including TFT array panel 100, the common electrode panel 200, and the LC layer 3 according to an embodiment of the present invention includes a plurality of transmissive regions TA and a plurality of reflective regions RA defined by the transparent electrodes 192 and the reflective electrodes 194, respectively. Areas disposed under and over the transmitting window 195 are the transmissive regions TA, and areas disposed under and over the reflective electrodes 194 are the reflective regions RA.

In the transmissive regions TA, light from a backlight unit (not shown) disposed under TFT array panel 100 passes through the LC layer 3 to display desired images. In the reflective regions RA, external light such as sunlight that is incident thereon passes through the common electrode panel 200 and through the LC layer 3 to reach the reflective electrodes 194. Then, the external light is reflected by the reflective electrodes 194 and passes through the LC layer 3 again, to display desired images. At this time, the embossed surface of reflective electrode 194 enhances reflective efficiency.

The upper passivation layer 180q is eliminated in the transmissive regions TA such that a cell gap in transmissive regions TA is larger than a cell gap in the reflective regions RA. The cell gap in transmissive regions TA is twice as large as the cell gap in the reflective regions RA.

The refraction index of upper layer 194q of reflecting electrode 194 may be larger than that of an alignment layer or LC layer 3 of the LCD. The thickness of upper layer 194q of reflecting electrode 194 may satisfy the relationship (wavelength of light) / (2x refraction index of upper layer 194q) such that light reflecting from the surface of the upper layer 194q of reflecting electrode 194 and light reflecting from the surface of lower layer 194p of reflecting electrode 194 constructively interfere with each other to enhance the reflectivity. Here, the wavelength of light may vary depending on colors of light, and the wavelength of light may be set to a predetermined wavelength substantially affecting visibility or a green wavelength located in a middle wavelength of visible rays.

A pixel electrode 191 and a wide end portion 177 of a drain electrode 175 overlap a storage electrode 133 to form an additional capacitor referred to as a "storage capacitor," which enhances the voltage storing capacity of the liquid crystal capacitor.

The contact assistants 81 and 82 are connected to the end portions 129 of gate lines 121 and the end portions 179 of data lines 171 through the contact holes 181 and 182, respectively. Contact assistants 81 and 82 protect the end portions 129 and 179 and enhance the adhesion between the end portions 129 and 179 and external devices.

A description of the common electrode panel 200 follows.

A light-blocking member 220 is formed on an insulating substrate 210 made of a material such as transparent glass or plastic. Light-blocking member 220 is referred to as a black matrix, and it prevents light leakage. The light blocking member 200 has a plurality of aperture regions facing pixel electrodes 191.

A plurality of color filters 230 are also formed on substrate 210, and they are placed substantially within the aperture regions enclosed by light-blocking member 220. Color filters 230 may extend substantially in the longitudinal direction along pixel electrodes 191. Color filters 230 may extend substantially in the longitudinal direction along pixel electrodes 191. Color filters 230 may represent one of the primary colors such as red, green, and blue colors.

The average thickness of color filters 230 disposed in the reflective region RA is about half that disposed in the transmissive region TA to provide substantially uniform color tone between the reflective region RA and the transmissive region TA.

An overcoat layer 250, made of an organic material, is formed on the light-blocking member 220 and color filters 230 to protect color filters 230. The overcoat layer 250 may be omitted.

Common electrode 270 is formed on the overcoat layer 250 and may be made of a transparent conductive material such as ITO or IZO.

Alignment layers (not shown) may be coated on inner surfaces of the panels 100 and 200, and polarizers (not shown) may be provided on outer surfaces of the panels 100 and 200.

LC layer 3 is subjected to vertical alignment or horizontal alignment.

The LCD may further include a plurality of elastic spacers (not shown) supporting TFT array panel 100 and the common electrode panel 200 to maintain a uniform cell gap.

TFT array panel 100 and the common electrode panel 200 of the LCD may be sealed by a sealant. The sealant is disposed on the boundary of the common electrode panel 200.

Next, a manufacturing reflecting electrode 194 of an LCD according to an embodiment of the present invention will be described.

As described above, reflecting electrode 194 of the LCD according to an embodiment of the present invention may have a double-layered structure having the lower layer 194p made of a silver-molybdenum alloy (Ag-Mo alloy) and the upper layer 194q made of indium zinc oxide (IZO) or amorphous indium tin oxide (a-ITO). The known reflecting electrode of the LCD includes a lower layer made of a molybdenum alloy (Mo alloy) and an upper layer made of an indium aluminum alloy (Al alloy). Here, the lower layer made of a Mo alloy enhances the contact characteristic between the upper layer made of an Al alloy and an underlying transparent electrode made of a transparent conductive material such as ITO or IZO.

The reflecting electrode of the LCD has previously been made by a manufacturing method as follows.

The lower layer and the upper layer of the reflecting electrode are deposited on the transparent electrode, and then annealed at about 210°C for about one hour to improve the contact characteristics of the lower layer and the upper layer of the reflecting electrode. After the annealing, a photosensitive film is deposited on the upper layer, and then a hard-bake process is performed to improve a contact characteristic between the photosensitive film and the upper layer such that the surface of the upper layer may not be over-etched. Next, the upper layer and the lower layer are patterned by photolithography and etching.

However, in accordance with an aspect of the present invention method of manufacturing a reflecting electrode 194 of an LCD comprises: depositing a lower layer 194p of reflecting electrode 194 including a Ag-Mo alloy on transparent electrode 192, depositing an upper layer 194q thereof including IZO or ITO, depositing a photosensitive film on the upper layer 194q, and patterning the upper layer 194q and the lower layer 194p by photolithography.

According to the foregoing aspect of the invention, there is no need for annealing between the depositing of the upper layer 194q and the patterning, and there is no need for a hard-bake process between the depositing of the photosensitive film and the patterning of the upper layer 194q and the lower layer 194p.

Now, an experimental example regarding a reflecting characteristic of the reflecting electrode of the LCD according to an embodiment of the present invention will be described referring to Table 1 to Table 3.

Table 1 shows representative results of the reflecting characteristics of reflecting electrode 194 including an Ag-Mo alloy according to an embodiment of the present invention and the known reflecting electrode including an Al-Nd alloy.

In the experimental example, the known reflecting electrode was formed by a manufacturing method including the annealing and the hard-bake process, and reflecting electrode 194 was formed by the manufacturing method according to an embodiment of the present invention, which does not include the annealing and the hard-bake process, as described above. Reflectivity thereof was then measured, respectively. The reflectivity was measured four times, and the reflectivity was measured without a polarizer in the LCD including the reflecting electrode.

**Table 1**

| | Reflecting electrode | | | | Average |
|---|---|---|---|---|---|
| Al-Nd alloy (with annealing and hard-bake) | 14.3 | 14.4 | 14.4 | 14.4 | 14.4 |
| Ag-Mo alloy (without annealing and hard-bake) | 15.7 | 15.6 | 15.9 | 15.8 | 15.8 |

Referring to Table 1, the reflectivity of reflecting electrode 194 according to an embodiment of the present invention is higher than that of the known reflecting electrode by about 12%.

Next, an experimental example regarding a reflecting characteristic of the reflecting electrode depending on the annealing and the hard-bake process will be described.

Firstly, the reflectivity and color coordinates of reflecting electrode 194 with annealing or without annealing after the lower layer made of a Ag-Mo Alloy was deposited on transparent electrode 192 in the manufacturing method of reflecting electrode 194 having a double-layered structure including the lower layer made of a Ag-Mo Alloy were measured. Here, the other conditions were the same except the annealing.

The reflectivity and the color coordinates were measured eight times, and the reflectivity was measured without a polarizer in the LCD including the reflecting electrode. The experimental results are shown in Table 2.

**Table 2**

| | | Reflectivity | Wx | Wy |
|---|---|---|---|---|
| Without annealing | Case 1 | 15.7 | 0.339 | 0.351 |
| | Case 2 | 15.6 | 0.341 | 0.353 |
| | Case 3 | 15.9 | 0.339 | 0.351 |
| | Case 4 | 15.8 | 0.338 | 0.351 |
| | Case 5 | 15.3 | 0.341 | 0.349 |
| | Case 6 | 15.4 | 0.339 | 0.351 |
| | Case 7 | 15.8 | 0.338 | 0.350 |
| | Case 8 | 15.7 | 0.336 | 0.348 |
| | Average | 15.7 | 0.339 | 0.351 |
| With annealing | Case 1 | 14.0 | 0.343 | 0.352 |
| | Case 2 | 14.3 | 0.343 | 0.352 |
| | Case 3 | 14.4 | 0.344 | 0.354 |
| | Case 4 | 13.7 | 0.347 | 0.356 |
| | Case 5 | 13.3 | 0.345 | 0.353 |
| | Case 6 | 13.9 | 0.344 | 0.353 |
| | Case 7 | 13.9 | 0.345 | 0.354 |
| | Case 8 | 13.2 | 0.348 | 0.356 |
| | Average | 13.8 | 0.345 | 0.354 |

Referring to Table 2, the reflectivity of reflecting electrode 194 without annealing was higher than that of reflecting electrode **194** with annealing by about 13%. The color coordinates Wx and Wy represented that reflecting electrode 194 with annealing became yellowish.

Next, the reflectivity and color coordinates of reflecting electrode 194 with a hard-bake process or without a hard-bake process after the photoresist film was deposited on the upper layer 194q of reflecting electrode 194 and before photolithography was performed in the manufacturing method of reflecting electrode 194 having a double-layered structure including the lower layer made of a Ag-Mo Alloy were measured. Here, the other conditions were the same except the hard-bake process.

The reflectivity and the color coordinates were measured eight times, and the reflectivity was measured without a polarizer in the LCD including the reflecting electrode. The experimental results are shown in Table 3.

**Table 3**

| | | Reflectivity | Wx | Wy |
|---|---|---|---|---|
| Without hard-bake process | Case 1 | 15.7 | 0.339 | 0.351 |
| | Case 2 | 15.6 | 0.341 | 0.353 |
| | Case 3 | 15.9 | 0.339 | 0.351 |
| | Case 4 | 15.8 | 0.338 | 0.351 |
| | Average | 15.8 | 0.339 | 0.352 |
| With hard-bake process | Case 1 | 16.0 | 0.338 | 0.351 |
| | Case 2 | 15.9 | 0.338 | 0.351 |
| | Case 3 | 15.6 | 0.340 | 0.352 |
| | Case 4 | 16.0 | 0.338 | 0.350 |
| | Average | 15.9 | 0.339 | 0.351 |

Referring to Table 3, the reflectivity of reflecting electrode 194 without a hard-bake process was higher than that of reflecting electrode 194 with a hard-bake process, and the color coordinates Wx and Wy represented that reflecting electrode 194 with a hard-bake process became yellowish.

As described above, reflecting electrode 194 of the LCD according to an embodiment of the present invention has higher reflectivity than the known reflecting electrode. Further, reflecting electrode 194 manufactured by the manufacturing method of the LCD according to an embodiment of the present invention without the annealing or the hard-bake process in forming reflecting electrode 194 has high reflectivity, and light reflected by reflecting electrode 194 becomes a little bit yellowish.

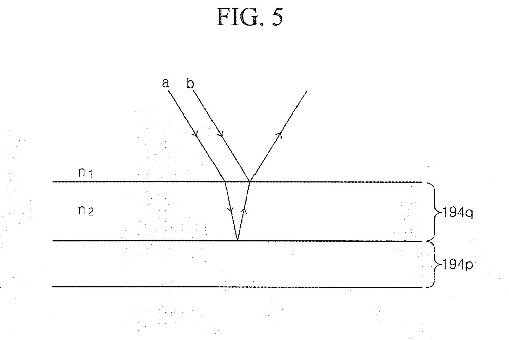

Now, the structure of reflecting electrode 194 of the LCD according to an embodiment of the present invention will be described in detail with reference to FIG. 5.

FIG. 5 is a schematic cross-sectional view of a reflecting electrode according to an embodiment of the present invention.

Referring to FIG. 5, reflecting electrode 194 has a double-layered structure including a lower layer 194p and an upper layer 194q.

The lower layer 194p of reflecting electrode 194 may be made of an Ag-Mo alloy, and the upper layer 194q of reflecting electrode 194 may be made of IZO or amorphous ITO.

The Ag-Mo alloy of the lower layer 194p has reflectivity as high as pure Ag, and has a good contact characteristic with the ITO or IZO of the underlying transparent electrode 192. Meanwhile, the Ag-Mo alloy has a very good contact characteristic with the photoresist film usually used in the pattering reflecting electrode 194.

Accordingly, if reflecting electrode 194 according to an embodiment of the invention has a single layer of the Ag-Mo alloy, then the edge of reflecting electrode 194 may have an inverse taper structure in patterning reflecting electrode 194 by photolithography or the surface of reflecting electrode 194 may be partially damaged with the photosensitive film when ashing the photosensitive film.

Reflecting electrode 194 according to an embodiment of the invention further includes the upper layer 194q made of IZO or amorphous ITO to prevent the inverse taper structure or surface damage.

Referring to FIG. 5, when the refraction index of the upper layer 194q of reflecting electrode 194 is n2 and the refraction index of an alignment layer (not shown) or LC layer 3 disposed on reflecting electrode 194 is n1, then n2 is preferably larger than n1, i.e., n2>n1, in the LCD according to an embodiment of the invention.

As described above, the thickness of the upper layer 194q of reflecting electrode 194 of the LCD according to an embodiment of the invention may satisfy (wavelength of light) / (2xthe refraction index of upper layer 194q) such that light reflecting on the surface of the upper layer 194q of reflecting electrode 194 and light reflecting on the surface of the lower layer 194p of reflecting electrode 194 have constructive interference with each other to enhance the reflectivity. As the arrow shows in FIG. 5, if light (a), which is passed through the upper layer 194q of reflecting electrode 194 and reflected on the surface of the lower layer 194p of reflecting electrode 194, and light (b), which is reflected on the surface of the upper layer 194q of reflecting electrode 194 have constructive interference with each other, then the reflectivity of reflecting electrode 194 is enhanced.

In the LCD according to an embodiment of the present invention, n2>n1 is satisfied. Accordingly, if 2d=λ/n2 is satisfied, then the light (a) and light (b) have constructive interference with each other. Here, 2d is the difference between the light (a) path and the light (b) path, and λ is the wavelength of incident light.

Here, 2d', i.e., the difference between the light (a) path and the light (b) path, may be substantially equal to twice the thickness d of the upper layer 194q, then the thickness of the upper layer 194q may be equal to 1/2×(λ/n2). Accordingly, when the thickness of the upper layer 194q of reflecting electrode 194 of the LCD according to an embodiment of the invention satisfies (wavelength of light) / (2 × refraction index of upper layer 194q), and the thickness d) is as described above, then the reflectivity of reflecting electrode 194 may be enhanced through the constructive interference.

The refraction index of the upper layer 194q of reflecting electrode 194 varies depending on the wavelength of incident light, and the refraction index is inversely proportional to the wavelength.

Accordingly, the thickness of the upper layer 194q of reflecting electrode 194 may be defined such that the reflectivity of reflecting electrode 194 is enhanced depending on the wavelength of a visible ray region ranging from about 400nm to about 700nm and the refraction index of the upper layer 194q.

For example, if wavelength λ is set to about 500nm and the upper layer 194q is made of ITO, then the refraction index of the upper layer 194q is about 2.0. Accordingly, the thickness of the upper layer 194q of reflecting electrode 194 may be d=1/2×(λ/n2)=1/2×(500nm/2)=125nm=1250Å for enhancing the reflectivity of reflecting electrode 194. The wavelength may be set to a predetermined wavelength substantially affecting visibility, or a green wavelength located in a middle wavelength of visible rays.

Reflecting electrode 194 according to an embodiment of the invention has a double-layered structure including the lower layer 194p made of an Ag-Mo alloy and the upper layer 194q made of IZO or amorphous ITO, and the thickness of the upper layer 194q of reflecting electrode 194 may be set such that the reflectivity of reflecting electrode 194 is enhanced.

As described above, the LCD according to an embodiment of the present invention includes reflecting electrode 194 including the lower layer 194p made of a Ag-Mo alloy and the upper layer 194q made of IZO or amorphous ITO such that the good contact characteristic between the lower layer 194p and the upper layer 194q may be obtained and the reflectivity of reflecting electrode 194 may be enhanced.

Also, the manufacturing method of the LCD according to an embodiment of the present invention may omit annealing between the depositing of the upper layer 194q and the patterning, and the hard-bake process between the depositing of the photosensitive film and the patterning of the upper layer 194q and the lower layer 194p to save production cost.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A display panel of a liquid crystal display, comprising:
a substrate; and a reflecting electrode formed on the substrate,
wherein the reflecting electrode has a double-layered structure including an upper layer and a lower layer, wherein the lower layer of the reflecting electrode comprises an Ag alloy containing Mo and the upper layer of the reflecting electrode comprises a transparent conductive material.

2. The display panel of claim 1, wherein the upper layer of the reflecting electrode comprises IZO or ITO.

3. The display panel of claim 2, wherein when the thickness of the upper layer is d, a predetermined wavelength of visible ray is λ, and a refraction index of the upper layer for the predetermined wavelength is n2, the thickness substantially satisfies d= 1/2×(λ/n2).

4. A liquid crystal display comprising:
a first substrate;
a gate line and a data line formed on the first substrate;
a thin film transistor connected to the gate line and the data line;
a pixel electrode connected to the thin film transistor and including a reflecting electrode;
a second substrate facing the first substrate;
a common electrode formed on the second substrate; and
a liquid crystal layer located between the first substrate and the second substrate, and
the reflecting electrode comprises a first layer including an Ag alloy containing Mo.

5. The liquid crystal display of claim 4, wherein the reflecting electrode further comprises a second layer disposed on the first layer.

6. The liquid crystal display of claim 5, wherein the second layer of the reflecting electrode comprises IZO or ITO.

7. The liquid crystal display of claim 5, wherein the refraction index of the second layer is larger than that of the LC layer.

8. The liquid crystal display of claim 7, wherein light reflected on the surface of the second layer and light reflected on the surface of the first layer have constructive interference with each other.

9. The liquid crystal display of any of claims 4 to 8, wherein the liquid crystal display has a transmissive area and a reflective area, the pixel electrode further comprises a transparent electrode, the transparent electrode is disposed in the transmissive area and the reflective area, and the reflecting electrode is disposed in the reflective area.

10. The liquid crystal display of claim 9, wherein the reflecting electrode is disposed on the transparent electrode.

11. A manufacturing method of an LCD, comprising:
forming a gate line;
depositing a gate insulating layer on the substrate;
forming a semiconductor layer on the gate insulating layer;
forming a data line and a drain electrode on the semiconductor layer; and
forming a pixel electrode connected to the drain electrode including a transparent electrode and a reflecting electrode disposed on a portion of the transparent electrode,
wherein the lower layer of the reflecting electrode comprises an Ag alloy containing Mo, and the upper layer of the reflecting electrode comprises a transparent conductive material.

12. The method of claim 11, wherein the upper layer of the reflecting electrode comprises IZO or ITO.

13. The method of claim 12, wherein when the thickness of the upper layer is d, a predetermined wavelength of visible ray is λ, and a refraction index of the upper layer for the predetermined wavelength is n2, the thickness substantially satisfies d= 1/2×(λ/n2).

14. The method of claim 13, wherein light reflected on the surface of the upper layer and light reflected on the surface of the lower layer have constructive interference with each other.

15. The method of any of claims 11 to 14, wherein the forming of the pixel electrode comprises:
forming the transparent electrode;
depositing the lower layer of the reflecting electrode on the transparent electrode;
depositing the upper layer of the reflecting electrode on the lower layer;
coating a photosensitive film on the upper layer of the reflecting electrode; and
patterning the upper layer and the lower layer of the reflecting electrode by photolithography and etching,
wherein the upper layer of the reflecting electrode comprises IZO or ITO.

16. The method of claim 12, wherein the deposited upper layer is not annealed before being coated with photosensitive film and the photosensitive film is not hard baked before patterning of the upper layer and the lower layer.

17. The method of claim 15, wherein when the thickness of the upper layer is d, the predetermined wavelength of visible ray is λ, and the refraction index of the upper layer for the predetermined wavelength is n2, the thickness substantially satisfies d= 1/2×(λ/n2).

18. The method of claim 16 or 17, wherein light reflected on the surface of the upper layer and light reflected on the surface of the lower layer constructively interfere with each other.
